# EUROPEAN PATENT SPECIFICATION

(11) **EP 1 076 594 B1**
(45) Date of publication and mention of the grant of the patent: **12.02.2003**
(21) Application number: 99917646.4
(22) Date of filing: 20.04.1999
(51) Int. Cl.: B01D 53/50

(54) **A METHOD OF PRODUCING SO2 SORBENT THAT IS SUITABLE FOR USE TO DESULFURIZE COMBUSTION GASES**
VERFAHREN ZUR HERSTELLUNG EINES SO2-SORPTIONSMITTELS DAS ZUR ENTSCHWEFELUNG VON VERBRENNUNGSABGASEN GEEIGNET IST
PROCEDE DE PRODUCTION DE SORBANT DE SO2 ADAPTE POUR DESULFURER DES GAZ DE COMBUSTION

(30) Priority: 08.05.1998 US 74905
(43) Date of publication of application: 21.02.2001
(73) Proprietor: ALSTOM POWER INC., Windsor, Connecticut 06095 (US)
(72) Inventor: ANDRUS, Herbert, Elliott, Jr., Granby, CT 06035 (US); McCARTNEY, Michael, Scott, Bloomfield, CT 06002 (US)
(74) Representative: Hellwig, Tillmann, Dr.
(86) International application number: US9908718
(87) International publication number: WO99058226

(56) References cited:
- WO-A-88/04196
- CA-A- 2 199 454
- US-A- 5 006 323

## Description

### BACKGROUND OF THE INVENTION

This invention relates to SO₂ sorbents, and more specifically, to a method of producing SO₂ sorbent that is suitable for use to desulfurize combustion gases.

Sulfur in coal exists in two forms: organic and inorganic. The inorganic compound pyrite, FeS₂, is present as discrete particles within the fuel, and typically accounts for twenty to fifty percent of the total sulfur. The milling and classifying operations associated with pulverized-fuel steam generators with which pulverizers are utilized separate a substantial portion of the pyritic sulfur from the coal. An additional amount of inorganic sulfur is retained in the bottom ash and the fly ash leaving the pulverized-fuel steam generators in solid form.

Contained in the molecular structure of the coal, organic sulfur is oxidized during the combustion process and emitted from the pulverized-fuel steam generators as gaseous oxides of sulfur. The principal oxidizing reaction leads to the formation of sulfur dioxide, SO₂. In addition to SO₂, lesser quantities of sulfur trioxide, SO₃, are formed during combustion. Typically, the ratio of SO₂/SO₃ in combustion gases ranges from 20:1 to 80:1. SO₃ is highly reactive and is extremely hygroscopic compared to SO₂. As such, SO₃ is capable of readily combining with water to form sulfuric-acid aerosols. Such a reaction is enhanced by the presence of fine particles, which serve as condensation nuclei. The resulting aerosol is a principal constituent of visible stack plumes exiting from the stacks associated with pulverized-fuel steam generators.

Historically, gaseous sulfur-dioxide emissions have been controlled by either dispersion or reduction. Dispersion of SO₂ and other pollutants through tall stacks is the oldest form of control. Under favorable meterorological conditions tall stacks can effectively limit ground-level SO₂ concentration to local ambient air-quality standards. Thermal inversions or comparable short-term meteorological conditions can impair the effectiveness of dispersion as a control method. A further and more critical concern over control by dispersion is the accumulating scientific evidence that oxides of sulfur and nitrogen are principal precursors to acid precipitation.

Reduction of sulfur emissions is known to have been achieved through one or a combination of the following: switching to lower-sulfur fuels, use of fuel desulfurization methods, and use of flue-gas desulfurization systems. Switching to lower-sulfur fuels, however, is not possible for many large fossil fuel-fired steam generating plants. Fuel desulfurization processes range from conventional coal washing to coal liquefaction and gasification. Coal washing is effective in reducing the pyritic sulfur in the coal. Coal washing cannot, however, remove the organic sulfur from the coal matrix, and as such coal washing is limited to sulfur reduction of less than fifty percent. Flue-gas desulfurization is believed to have begun in England in 1935. Since that time, over fifty flue-gas desulfurization processes are known to have been developed, differing in the chemical reagents and the resultant end products.

Lime or limestone scrubbing is the oldest and most common method of flue-gas desulfurization. The first successful closed-loop lime/limestone process has been credited to the English firm of J. Howden and Company. The first pilot plant tests thereof that were conducted had the scrubber effluent being recycled to the absorber. Unfortunately, however, scale was found to have formed in the absorber. The critical breakthrough in system chemistry for this process came when the problem was identified as one of excessive gypsum supersaturation in the scrubber. The solution to this problem was found to lie in the addition of a crystallization tank and in increasing the liquid-to-gas ratio. Adding a crystallization tank operating at high solids concentration allows calcium-sulfur compounds to precipitate outside the scrubber. Because of precipitation reactions, the absorbent recycled to the scrubber has a lower concentration of scale-forming gypsum. A high liquid-to-gas ratio minimizes the increase in supersaturation across the scrubber and thereby further diminishes the potential for scale formation.

Later on, an attempt was made to develop and market a limestone-injection scrubbing process. In accordance therewith, pulverized limestone was injected into the furnace simultaneously with the coal. The resulting calcined limestone, CaO, was entrained in the flue gas along with fly ash. A water scrubber was used to remove the fly ash, limestone, and SO₂ from the flue gas. Several systems were placed into operation but persistent difficulties with scaling, poor additive utilization, and plugging of furnace convective surfaces prompted a return to the older Howden tail-end process.

In a typical lime/limestone wet flue-gas desulfurization system, flue gas from the furnace enters the scrubber and contacts the absorbent slurry while sulfur dioxide and lesser amounts of oxygen are simultaneously absorbed. The spent absorbent returns to the reaction tank, or scrubber-effluent hold tank, where the dissolved sulfur compounds are precipitated as calcium salts. Fresh limestone or lime slurry is added to regenerate the spent absorbent.

Minimizing the amount of alkali additive required to obtain a desired SO₂ removal efficiency reduces the operating cost of a flue-gas desulfurization system. To determine the factors influencing additive use, it is necessary to understand the additive dissolution process and the effect of system operating conditions, design, and additive properties on this process.

In a lime/limestone SO₂ scrubbing system, the addition of alkali is controlled to neutralize the SO₂ absorbed and precipitate the calcium-sulfur salts. Although in theory the amount of lime or limestone required is stoichiometrically equal to the amount of SO₂ removed, the kinetics of the limestone dissolution process dictates the use of excess additive to achieve the desired SO₂ removal efficiency.

Additive stoichiometry is usually defined as the moles of additive fed, excluding impurities, to a scrubber per mole of SO₂ absorbed. Although it can be, and sometimes is, defined as the moles of additive fed per mole of SO₂ entering the scrubber.

Although not usually significant, the absorption of other acid gases such as HCI can influence utilization of the additive. Utilization then could be more broadly defined as the fraction of additive converted to reaction products in the scrubber. In order to increase utilization, one must thus either reduce the additive feed rate while maintaining constant SO₂ absorption efficiency or increase the SO₂ removal efficiency for a given limestone feed rate.

The dissolution rate of alkali additives is inversely proportional to the solution pH. Therefore, better utilization is possible by operating a system at low pH levels. However, reducing the pH can also reduce SO₂ removal efficiency. As such, it is usually more productive to increase the absorber performance for the same system pH, or increase the additive dissolution and utilization at a constant system pH.

Lime or calcium oxide, CaO, is obtained from calcination of limestone, CaCo₃. The conditions under which the limestone is calcined or "burned" can have a great impact on the reactivity of the lime produced. Because of the high reactivity of most commercially available lime, it is possible to achieve high utilization, as much as ninety-five percent, with minimum impact on the remainder of the system. The main design parameter in maximizing utilization is the pH of the scrubbing slurry. With pH maintained above 8.5, considerable carbon-dioxide absorption occurs because of the ten to fifteen percent by volume of CO₂ in the flue gas. Carbon dioxide reacts with lime in a manner similar to sulfur dioxide to form calcium carbonate. Calcium carbonate, being insoluble at high pH, precipitates and thus prevents the calcium from reacting with sulfur dioxide. Based on known data, it has been found that a decrease in utilization from ninety-five percent to eighty-five percent may occur as pH is increased from 7.5 to 9.0. In order, therefore, to reduce waste of the relatively high-cost lime, the pH of lime systems should thus be held below 8.5.

Limestone is usually less reactive than lime in flue-gas desulfurization systems operating under identical conditions. For this reason, system modifications are needed to produce limestone utilization in excess of ninety to ninety-five percent.

Limestone dissolution is a function of surface area of the suspended limestone and hydrogen-ion concentration, i.e., pH, of the solutions. Two methods are suggested of increasing the limestone dissolution rate and, therefore, utilization; namely, first, by increasing the surface area, and secondly, by increasing the hydrogen-ion concentration, i.e., reducing pH.

Large surface areas can be produced by finely grinding the limestone before the limestone is injected into the system. Limestone is typically ground to eighty to ninety percent through 325 mesh in flue-gas desulfurization applications. Finer grinds are possible, but more pulverizer power is required. However, this could still conceivably prove to be cost-effective.

Limestone utilization can also be improved by operating at reduced pH's. However, this impairs efficiency. Namely, to maintain the same removal at reduced pH, the absorber design must be modified. For example, the liquid-to-gas ratio may be increased, with concomitant higher pumping costs, or tower height may be increased, with concomitant higher capital costs. Thus, the cost-effectiveness of any such adjustments need to be examined before being implemented.

It is also possible to use a two-stage operation in which the primary stage is operated at reduced pH to optimize lime/limestone use, and the second stage is operated at high pH to accomplish the required SO₂ removal. In accord with such operation, limestone is fed to the second stage and the spent slurry from the second stage is fed to the primary stage before being bled off.

Another technique for improving limestone utilization is to increase residence time. To this end, at a fixed rate of reaction, the longer a limestone particle remains in the absorber/reaction-tank loop, the greater will be the fraction of the particle that dissolves.

The residence time of the solid particles in the process is a function of the particle inventory and the solids bleed rate. However, because the bleed rate is fixed by the SO₂ absorption rate at steady-state, only the inventory can be adjusted. In this regard, the solids inventory can be made greater by increasing the reaction-tank volume and/or the solids concentration. But, because the slurry is abrasive, the solids concentration has a practical upper limit of about fifteen percent. Thus, the relatively low cost of tanks and low mixer power requirements suggests that, in many situations it may, therefore, be less expensive to increase the tank size to improve limestone use.

As such, although at present furnace limestone injection is perceived to be a commercially viable technology for purposes of accomplishing therewith cheap flue-gas desulfurization, to date it has found only limited applicability because of the low utilization of the sorbent that is associated with the employment of furnace limestone injection. It is known, however, that such utilization of the sorbent when furnace limestone injection is employed could be increased by reducing the particle size of the sorbent. To do so though has been considered to be uneconomical because of the high cost associated with effecting the requisite reduction in the particle size of the sorbent, i.e., the limestone, by the grinding thereof.

Continuing, dry scrubbing technology is considered by some to be a possible alternative to the employment of wet desulfurization technologies in a fossil fuel-fired power generation plant. The sorbent that is employed with the dry scrubbing technology is lime whereas the sorbent that is most often employed with the wet desulfurization technologies is limestone. Unfortunately, however, the dry scrubbing technology is disadvantageously characterized not only by the fact that lime is more expensive than limestone, but is also disadvantageously characterized by the fact that lime is not available in some markets.

It is known that some attempts have been made to date to utilize furnace injection limestone as a possible source of potentially cheap lime that could be employed as the sorbent in applications wherein it is desired to use the dry scrubbing technology. To this end, in accordance with such attempts limestone is injected into the furnace where the limestone is calcined to lime and where this lime thereafter is operative to react within the furnace with SO₂, which is generated from the combustion of the fossil fuel within the furnace, such that some sulfur absorption is thereby effected by such lime within the furnace.

Although some sulfur absorption is effected in the furnace by the lime that results from the calcination within the furnace of the injected limestone, the intent is that most of the desired sulfur absorption be accomplished through use of the dry scrubbing technology. To this end, the active species insofar as the dry scrubbing technology is concerned is Ca(OH)₂, which is formed by reactivating with water the lime that is entrained in the ash, the latter being generated as a result of the combustion of the fossil fuel in the furnace. A limiting factor insofar as the reactivation of such lime, i.e., the conversion thereof to Ca(OH)₂ is concerned, is that such lime represents only a very small portion of the contents of the ash in which such lime is entrained as contrasted to the amount of ash that is contained therein. Another limiting factor is that it is not possible to exercise control over the amount of such lime that becomes entrained in the ash such as to be able to thereby effectively coordinate the amount of lime, which is produced from the calcination within the furnace of the limestone injected thereinto, with the amount of lime that is required in order to thereby achieve the desired performance from the use of the dry scrubbing technology.

With further regard to the matter of the attempts, which are known to have been made heretodate in an attempt to produce lime from limestone and/or to improve the SO₂ capture characteristics of sorbent for purposes of enhancing the utilization thereof in flue-gas desulfurization systems, one such attempt, by way of exemplification and not limitation, is that to which the subject matter of U.S. Patent No. 4,867,955 is directed. U.S. Patent No. 4,867,955 issued on September 19, 1989 and is entitled "Method Of Desulfurizing Combustion Gases". In accordance with the teachings of U.S. Patent No. 4,867,955, there is provided a method of desulfurizing gaseous products of combustion comprising the steps of: burning a sulfur-containing solid fuel within a combustion chamber to produce fly ash and combustion gases comprising a sulfurous gas; heating a particulate calcinable compound comprising a compound selected from the group consisting of the carbonates of magnesium, calcium, sodium, and mixtures thereof, in a selected temperature zone within the combustion chamber for a residence time sufficient for calcination of the calcinable compound to its respective oxide, wherein the particle size of the calcinable compound, the selected temperature zone and the residence time are selected to effect calcination of a substantial amount of the calcinable compound to its respective oxide; removing the oxide of the calcinable compound from the combustion chamber; removing the combustion gases from the combustion chamber; and treating the removed combustion gases with the oxide to remove a substantial amount of the sulfurous gas from the combustion gases.

Another such attempt, by way of exemplification and not limitation, is that to which U.S. Patent No. 5,006,323 is directed. U.S. Patent No. 5,006,323 issued on April 9, 1991 and is entitled "Method Of Desulfurizing Combustion Gases". In accordance with the teachings of U.S. Patent No. 5,006,323, there is provided a method of desulfurizing gaseous products of combustion comprising the steps of: burning a sulfur-containing solid fuel within a combustion chamber to produce fly ash and combustion gases comprising sulfur dioxide; heating a particulate calcinable compound comprising a compound selected from the group consisting of the carbonates of magnesium, calcium, sodium, and mixtures thereof, in a selected temperature zone within the combustion chamber for a residence time sufficient for calcination of the calcinable compound to its respective oxide, wherein the particle size of the calcinable compound, the selected temperature zone and the residence time are selected to effect calcination of a substantial amount of the calcinable compound to its respective oxide; removing the oxide of the calcinable compound from the combustion chamber; removing the combustion gases from the combustion chamber; forming a slurry comprised of the oxide of the calcinable compound; and treating the removed combustion gases with the slurry to remove a substantial amount of the sulfur dioxide from the combustion gases.

A still another such attempt, by way of exemplification and not limitation, is that to which U.S. Patent No. 5,492,685 is directed. U.S. Patent No. 5,492,685 issued on February 20, 1996 and is entitled "High Surface Area Hydrated Lime And Method Of Removing SO₂ From A Gas Stream". In accordance with the teachings of U.S. Patent No. 5,492,685, there is provided: a) a hydrated lime alleged to have superior properties of high surface area, high porosity, and small particle size; b) methods of sorbing SO₂ from waste gas streams using the subject high surface area hydrated lime as a sorbent; and c) controlling the physical properties of the hydrated lime for optimum suitability for use in any one of a variety of dry sorbent injection systems for SO₂ removal.

Yet another such attempt, by way of exemplification and not limitation, is that which is described in the technical paper entitled "FGD Experience At Poland's Rybnik Power Station: Dry Method With Humidification", the co-authors of which are: L. Pinko of Energopomiar; J. Chacula of the Rybnik Power Plant; W. Ellison of Ellison Consultants; and J. Podkanski of the Institute of Chemical Engineering, Polish Academy of Sciences. In this technical paper there is described a process wherein limestone is ground, and after being ground this limestone is next blown into a furnace. In the furnace, the limestone is decomposed into calcium oxide and carbon dioxide. This calcium oxide then reacts with SO₂ and thereafter, together with the flue gases and fly ash passes through a system of air reheaters. After these air reheaters, the flue gases are directed to the upper part of a concurrent reactor through a duct that is suitably designed so as to ensure uniform flow of the flue gases, fly ash and sorbent particles. Hydrogenated lime and recycled ash are blown into the duct just before the reactor. In the reactor the flue gases are subjected to humidification and desulfurization. After this humidification and desulfurization thereof, the flue gases, at the bottom of the reactor, are mixed with hot air and directed to electrostatic precipitators. Thereafter, the fly ash and sorbent from the bottom of the reactor, and a part of the fly ash and sorbent from the precipitators are recycled.

Yet still another such attempt, by way of exemplification and not limitation, is that which is described in the technical paper entitled "B & W's E-LIDS™ Process-Advanced SOₓ, Particulate, And Air Toxics Control For The Year 2000", the co-authors of which are Deborah A. Madden and Michael J. Holmes, both of McDermott Technology, Inc. In this technical paper there is described a limestone-based furnace injection/dry scrubbing SO₂ removal process, which comprises the integration of three flue gas cleanup technologies: furnace limestone injection, dry scrubbing, and pulse-jet fabric filtration, which are alleged to be commercially-proven. More specifically, in accordance with the subject process SO₂ removal occurs in the boiler furnace and convection pass, in the dry scrubber, and in the fabric filter. To this end, limestone is pulverized and injected as a dry powder into the flue gases in the upper furnace cavity of the boiler. Upon being so injected, the limestone undergoes calcination to form lime, a portion of which reacts with SO₂ in the flue gases forming calcium sulfate. The flue gases exiting from the boiler are ultimately made to pass through a dry scrubber reactor where these flue gases are contacted by a slurry containing calcium hydroxide. In the dry scrubber, the flue gases are cooled and humidified to conditions near the water saturation temperature. Under these conditions, a portion of the SO₂ in the gas reacts with the calcium hydroxide. Water contained in the slurry droplets evaporates as the droplets pass through the dry scrubber reactor, and the products leave the dry scrubber as a dry powder still suspended in the flue gases. The flue gases then enter a baghouse where coal fly ash, spent sorbent and unreacted sorbent particles are collected. The use of a baghouse is alleged to be a key feature because of the additional SO₂ removal the baghouse yields as the flue gases pass through the sorbent-containing filter cake on the filter bags of the baghouse. Upstream of the dry scrubber there is provided a particulate collection device to remove particulate matter from the flue gases. The portion of the solids from the particulate collection device are recycled to a reagent preparation system to produce a calcium hydroxide slurry for the dry scrubber.

Thus, although the attempts to which reference has been had hereinbefore allegedly have been demonstrated to be operative for the purpose for which they have been intended, there has nevertheless been evidenced in the prior art a need for a new and improved method of producing SO₂ sorbent that is suitable for use to desulfurize combustion gases. More specifically, a need has been evidenced in the prior art for a new and improved method of producing SO₂ sorbent in a more efficient manner than that which is currently available through the use of the methods of producing SO₂ sorbent that are presently known in the prior art.

It is an object of the present invention to provide a new and improved method of producing SO₂ sorbent in a more efficient manner than that which is currently available through the use of the methods of producing SO₂ sorbent that are presently known in the prior art.

It is another object of the present invention to provide such a new and improved method of producing SO₂ sorbent that is suitable for use to effect therewith the desulfurization of combustion gases, which is characterized in that the SO₂ sorbent that is produced from the use of the subject method is limestone particles that have been "deadburned" in order to thereby create therefrom unreactive lime particles.

It is still another object of the present invention to provide such a new and improved method of producing SO₂ sorbent that is suitable for use to effect therewith the desulfurization of combustion gases, which is characterized in that the "deadburning" of the limestone particles is effected by injecting limestone particles, either in the form of coarse grade particles or otherwise, into a conventional solid fuel-fired steam generator such that concomitantly with the generation of steam in the conventional solid fuel-fired steam generator the limestone particles that are injected thereinto are subjected to "deadburning".

Another object of the present invention is to provide such a new and improved method of producing SO₂ sorbent that is suitable for use to effect therewith the desulfurization of combustion gases, which is characterized in that the limestone particles that are to be subjected to "deadburning" in the conventional solid fuel-fired steam generator, are, unless the limestone particles are already of the desired size, mixed with the solid fuel upstream of a pulverizer for purposes of causing both the limestone particles and the solid fuel to be subjected to pulverization in the pulverizer.

A still another object of the present invention is to provide such a new and improved method of producing SO₂ sorbent that is suitable for use to effect therewith the desulfurization of combustion gases, which is characterized in that the limestone particles that are to be subjected to "deadburning" in the conventional solid fuel-fired steam generator, if not previously mixed with the solid fuel upstream of the pulverizer, are then either caused to be mixed with the solid fuel downstream of the pulverizer and are injected into the conventional solid fuel-fired steam generator in the form of a mixture of limestone particles and solid fuel, or the limestone particles and the solid fuel are each injected separately into the conventional solid fuel-fired steam generator.

A further object of the present invention is to provide such a new and improved method of producing SO₂ sorbent that is suitable for use to effect therewith the desulfurization of combustion gases, which is characterized in that the limestone particles that are subjected to "deadburning" in the conventional solid fuel-fired steam generator concomitantly with the generation of steam in the conventional solid fuel-fired steam generator, are made to follow a particular path through the conventional solid fuel-fired steam generator so as to avoid a mixing of the limestone particles with sulfur in the conventional solid fuel-fired steam generator.

Yet an object of the present invention is to provide such a new and improved method of producing SO₂ sorbent that is suitable for use to effect therewith the desulfurization of combustion gases, which is characterized in that it is relatively easy to implement, relatively simple to employ, yet is relatively inexpensive to provide.

### SUMMARY OF THE PRESENT INVENTION

In accordance with the present invention there is provided a new and improved method of producing SO₂ sorbent that is suitable for use to effect therewith the desulfurization of combustion gases. The subject method of producing SO₂ sorbent that is suitable for use to effect therewith the desulfurization of combustion gases comprises the following steps. Limestone particles are provided in the form of coarse grade particles or otherwise. These limestone particles are either mixed with solid fuel upstream of a pulverizer for purposes of causing both the limestone particles and the solid fuel to be subjected to pulverization in the pulverizer, or if the limestone particles are already of the desired size the limestone particles are either caused to be mixed with the solid fuel downstream of the pulverizer or are caused to remain separate from the solid fuel. These limestone particles and the solid fuel are either injected into a conventional solid fuel-fired steam generator in the form of a mixture, or the limestone particles and the solid fuel are each injected separately into the conventional solid fuel-fired steam generator. Concomitantly with the generation of steam in the conventional solid fuel-fired steam generator these limestone particles are subjected to "deadburning" in the conventional solid fuel-fired steam generator thereby creating unreactive lime particles therefrom. Concurrent with the generation of steam in the conventional solid fuel-fired steam generator these limestone particles while being subjected to "deadburning" therewithin are made to follow a particular path through the conventional solid fuel-fired steam generator so as to avoid mixing of these limestone particles with sulfur in the conventional solid fuel-fired steam generator.

Particularly noteworthy with regard to the subject method of producing SO₂ sorbent that is suitable for use to effect therewith the desulfurization of combustion gases of the present invention is the fact that heretodate, i.e., prior to the present invention, it had been believed that if limestone was "calcined" in a furnace at too high a temperature, the lime created therefrom would become "deadburned" and, thus, unreactive, therefore making such lime, which was "deadburned", unsuitable for the desulfurization of combustion gases, i.e., unsuitable for flue-gas desulfurization uses. As such, in accordance with the teachings of the prior art, for purposes of the "calcination" thereof in a furnace steps were intentionally taken to ensure that the limestone, which was to be "calcined", would be injected into the furnace at a location whereat both the temperature was low enough to ensure that "deadburning" of the limestone would be avoided and that after the injection of the limestone into the furnace the residence time of the limestone therein would be insufficient to cause such limestone to become "deadburned". This is in sharp contrast to, i.e., is the exact opposite of, the teachings of the present invention wherein the limestone, which is injected into a conventional solid fuel-fired steam generator, is purposely injected thereinto so as to ensure the "deadburning" thereof. Namely, such limestone is deliberately injected into a conventional solid fuel-fired steam generator at a location whereat the temperature is above that which is considered by the prior art to be suitable for "calcination" of limestone and whereat the residence time of the limestone within the conventional solid fuel-fired steam generator exceeds that which is considered by the prior art to be suitable for "calcination" of limestone.

### BRIEF DESCRIPTION OF THE DRAWINGS

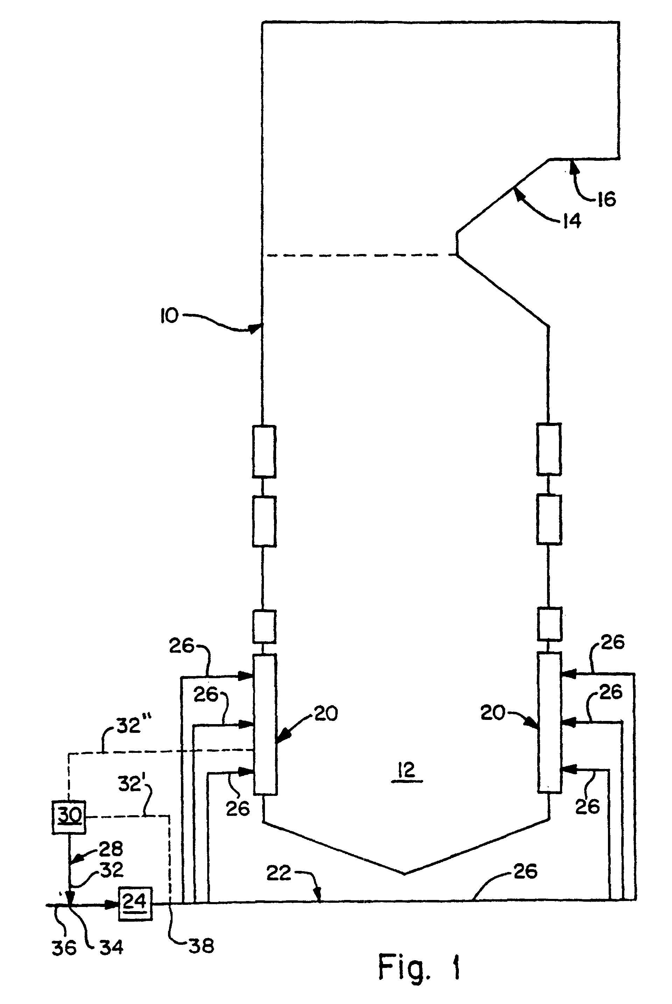

Figure 1 is a diagrammatic representation in the nature of a vertical sectional view of a conventional solid fuel-fired steam generator of suitable construction such that limestone particles are capable of being injected thereinto for the purposes of being subjected, concomitantly with the generation of steam within the conventional solid fuel-fired steam generator, to "deadburning" thereby creating unreactive lime particles therefrom in accordance with the present invention.

### DESCRIPTION OF THE PREFERRED EMBODIMENT

Referring now to Figure 1 of the drawing, there is depicted therein a conventional solid fuel-fired steam generator, generally designated by reference numeral 10. Inasmuch as the nature of the construction and the mode of operation of conventional solid fuel-fired steam generators per se are well-known to those skilled in the art, it is not deemed necessary, therefore, to set forth herein a detailed description of the conventional solid fuel-fired steam generator 10 of Figure 1. Rather, for purposes of obtaining an understanding of a conventional solid fuel-fired steam generator 10, which is capable of being employed in connection with the practice of the method of producing SO₂ sorbent that is suitable for use for the purpose of effecting therewith the desulfurization of combustion gases in accordance with the present invention, it is deemed to be sufficient that there be presented herein merely a description of the nature of the components of the aforesaid conventional solid fuel-fired steam generator 10, which are made use of in connection with the practice of the method of the present invention. For a more detailed description of the nature of the construction and the mode of operation of the components of the conventional solid fuel-fired steam generator 10, which are not described herein, one may have reference to the prior art, e.g., U.S. Patent No. 4,719,587, which issued January 12, 1988 to F. J. Berte and which is assigned to tne same assignee as the present patent application.

Referring further to Figure 1 of the drawing, the conventional sold fuel-fired steam generator 10 as illustrated therein includes a burner region, generally designated by the reference numeral 12. As will be described more fully hereinafter, it is within the burner region 12 of the conventional solid fuel-fired steam generator 10 that in a manner well-known to those skilled in this art combustion of the pulverized solid fuel and air is initiated. The hot gases that are produced from combustion of the pulverized solid fuel and air rise upwardly in the conventional solid fuel-fired steam generator 10. During the upwardly movement thereof in the conventional solid fuel-fired steam generator 10, the hot gases in a manner well-known to those skilled in this art give up heat to the fluid passing through the tubes (not shown in the interest of maintaining clarity of illustration in the drawing) that in known fashion line all four of the walls of the conventional solid fuel-fired steam generator 10 so as to thereby produce steam as a consequence of such heat transfer from the hot gases. Then, the hot gases exit the conventional solid fuel-fired steam generator 10 through the horizontal pass, generally designated by the reference numeral 14, of the conventional solid fuel-fired steam generator 10, which in turn leads to the rear gas pass, generally designated by the reference numeral 16, of the conventional solid fuel-fired steam generator 10. Although not shown in Figure 1 of the drawing in the interest of maintaining clarity of illustration therein, both the horizontal pass 14 and the rear gas pass 16 commonly contain other heat exchange surface for generating and superheating steam, in a manner well-known to those skilled in this art. Thereafter, the steam commonly is made to flow to a turbine (not shown), which forms one component of a turbine/generator set (not shown), such that the steam provides the motive power to drive the turbine (not shown) and thereby also the generator (not shown), which in known fashion is cooperatively associated with the turbine, such that electricity is thus produced from the generator (not shown).

Continuing with the description of the conventional solid fuel-fired steam generator 10, as best understood with reference to Figure 1 of the drawing the conventional solid fuel-fired steam generator 10 includes a plurality of housings, each preferably in the form of a main windbox, denoted generally in the drawing by the reference numeral 20. Each of the main windboxes 20 in a manner well-known to those skilled in this art is supported by suitable support means (not shown) in the burner region 12 of the conventional solid fuel-fired steam generator 10 such that the longitudinal axis of each of the main windboxes 20 extends substantially in parallel relation to the longitudinal axis of the conventional solid fuel-fired steam generator 10. In known fashion each of the main windboxes 20 includes a plurality of air compartments (not shown in the interest of maintaining clarity of illustration in the drawing) and a plurality of fuel compartments (not shown in the interest of maintaining clarity of illustration in the drawing), preferably arranged in interposed relation with each other. Moreover, an air nozzle (not shown) is supported in mounted relation within each of the air compartments (not shown) such as to be operative for purposes of effecting therewith the injection of the air required for combustion into the burner region 12 of the conventional solid fuel-fired steam generator 10. Similarly, a fuel nozzle (not shown) is supported in mounted relation within each of the fuel compartments (not shown) such as to be operative for purposes of effecting therewith the injection into the burner region 12 of the conventional solid fuel-fired steam generator 10 of the solid fuel that is to be combusted therewithin. For a more detailed description of the nature of the construction and the mode of operation of the main windboxes 20, which has not been described herein, one may have reference to the prior art, e.g., U.S. Patent No. 5,315,939, which issued May 31, 1994 to M. J. Rini et al. and which is assigned to the same assignee as the present patent application.

With further regard to the main windboxes 20 of the conventional solid fuel-fired steam generator 10, an air supply means (not shown in the interest of maintaining clarity of illustration in the drawing) is operatively connected to each of the plurality of air compartments (not shown) and more specifically to the air nozzles (not shown), which are supported in mounted relation within the air compartments (not shown) whereby the air supply means (not shown) supplies air thereto and therethrough into the burner region 12 of the conventional solid fuel-fired steam generator 10. To this end, the air supply means (not shown) in known fashion includes a fan (not shown) and air ducts (not shown), which are connected in fluid flow relation to the fan (not shown) on the one hand and to the air nozzles (not shown), which are supported in mounted relation within the air compartments (not shown), on the other hand, through separate valves and controls (not shown). Similarly, a pulverized solid fuel supply means, which is illustrated schematically in Figure 1 of the drawing wherein the pulverized solid fuel supply means is denoted generally by the reference numeral 22, is operatively connected to the fuel nozzles (not shown), which are supported in mounted relation within the fuel compartments (not shown), whereby the pulverized solid fuel supply means 22 supplies pulverized solid fuel to the fuel compartments (not shown), and more specifically to the fuel nozzles (not shown) supported in mounted relation therewithin for injection therefrom into the burner region 12 of the conventional solid fuel-fired steam generator 10. To this end, the pulverized solid fuel supply means 22 includes a pulverizer, denoted generally in the drawings by the reference numeral 24, and the pulverized solid fuel ducts, denoted by the reference numeral 26. The pulverizer 24 in a manner well-known to those skilled in the art produces pulverized solid fuel of the desired fineness. Although not shown in the interest of maintaining clarity of illustration in the drawing, the pulverizer 24 is operatively connected to the fan (not shown) of the air supply means (not shown), to which reference has been had hereinbefore, such that air is also supplied from the fan (not shown) of the air supply means (not shown) to the pulverizer 24 whereby the pulverized solid fuel supplied from the pulverizer 24 to the fuel nozzles (not shown) supported in mounted relation within the fuel compartments (not shown) is transported through the pulverized solid fuel ducts 26 in an air stream in a manner, which is well-known to those skilled in the art of pulverization.

There will next be set forth herein a description of the manner in which the limestone particles, which are to be subjected to "deadburning" for purposes of creating unreactive lime particles therefrom, are injected into the conventional solid fuel-fired steam generator 10. To this end, as best understood with reference to Figure 1 of the drawing, the conventional solid fuel-fired steam generator 10 in accordance with the present invention has a limestone particle supply means, generally designated by the reference numeral 28, cooperatively associated therewith. The limestone particle supply means 28 includes a suitable storage means, generally designated by the reference numeral 30, from which the limestone particles are preferably supplied, and duct means, denoted by the reference numeral 32, by means of which the limestone particles are transported from the storage means 30 to the desired location.

In accordance with the present invention the limestone particles, which are to be injected into the conventional solid fuel-fired steam generator 10 for purposes of effecting therewithin the subjection thereof to "deadburning" for purposes of creating unreactive lime particles therefrom, can be made to follow any one of several different paths in going from the storage means 30 to the point of injection thereof into the conventional solid fuel-fired steam generator 10. Namely, unless the limestone particles that are to be injected into the conventional solid fuel-fired steam generator 10 are already of the desired size, the limestone particles may be mixed with the solid fuel upstream of the pulverizer 24, i.e., the limestone particles, which are not already of the desired size, may, as illustrated by means of solid lines in Figure 1, be made to flow from the storage means 30 through the duct means 32 to a point, identified in Figure 1 by the reference numeral 34, whereat the limestone particles are made to join with the solid fuel, which as depicted by the arrow that is denoted in Figure 1 by the reference numeral 36 is being supplied to the pulverizer 24. As a result of such joining of the limestone particles with the solid fuel upstream of the pulverizer 24, both the limestone particles and the solid fuel are subjected to pulverization in the pulverizer 24 such that upon leaving the pulverizer 24 both the limestone particles and the solid fuel will be made to embody the fineness desired thereof. On the other hand, if the limestone particles are already of the desired size, the limestone particles, which are to be subjected to "deadburning" in the conventional solid fuel-fired steam generator 10 so as to thereby create unreactive lime particles therefrom, either may be caused to be mixed with the solid fuel downstream of the pulverizer 24, i.e., may be made to flow from the storage means 30 through the duct means 32', the latter being denoted in dotted lines in Figure 1, to a point identified in Figure 1 by the reference numeral 38 whereat the limestone particles are made to join with the solid fuel, which has undergone pulverization in the pulverizer 24 and are injected with the solid fuel in the form of a mixture. Or, the limestone particles, which are already of the desired size may, as depicted by the dotted line denoted in Figure 1 by the reference numeral 32", be made to flow from the storage means 30 directly to the conventional solid fuel-fired steam generator 10 such that the limestone particles and the solid fuel are each injected separately into the conventional solid fuel-fired steam generator 10.

As will be readily apparent from a reference to Figure 1 of the drawing, regardless of the path that the limestone particles may follow for purposes of being injected into the conventional solid fuel-fired steam generator 10 in order to thereby be subjected to "deadburning" whereby to create unreactive lime particles therefrom, the limestone particles in each case are injected into the conventional solid fuel-fired steam generator 10 such that the limestone particles are exposed to the highest temperatures that are present in the conventional solid fuel-fired steam generator 10. Namely, it is into the burner region 12 of the conventional solid fuel-fired steam generator 10, which as is well-known to those skilled in the art is where the highest temperatures exist within the conventional solid fuel-fired steam generator 10, that the limestone particles are injected regardless of the path that the limestone particles follow after leaving the storage means 30. In addition, since the burner region 12 is located, relatively speaking, at the bottom of the conventional solid fuel-fired steam generator 10, the limestone particles by virtue of being injected thereinto, regardless of the path that the limestone particles may follow before being injected thereinto, are also subjected to the greatest residence time within the conventional solid fuel-fired steam generator 10. Finally, mention is made here of the fact that since in terms of the relative density thereof the limestone particles generally are less dense than the solid fuel, the path of flow that the limestone particles and after the "deadburning" thereof the unreactive lime particles thereafter follow naturally in traversing the interior of the conventional solid fuel-fired steam generator 10 differs from the flow path followed by the solid fuel. As a consequence of this inherent tendency for the limestone particles and the solid fuel to follow different flow paths within the conventional solid fuel-fired steam generator 10, mixing of the limestone particles with sulfur, which originates with the solid fuel, is avoided in the conventional solid fuel-fired steam generator 10. Moreover, once the unreactive lime particles are created from the limestone particles due to the "deadburning" of the latter, any mixing of such unreactive lime particles with sulfur will essentially be to no avail, i.e., essentially no sulfur capture will be effected by the unreactive lime particles by virtue of the unreactive nature of such lime particles. After flowing through the conventional solid fuel-fired steam generator 10 in a manner well-known to those skilled in the art the combustion gases exit the conventional solid fuel-fired steam generator 10 from the rear gas pass 16 thereof. Upon the separation thereafter of the unreactive lime particles from the combustion gases followed by the subsequent conditioning of the unreactive lime particles to render them reactive, the latter are suitable for use for effecting therewith the desulfurization of combustion gases.

Thus, in accordance with the present invention there has been provided a new and improved method of producing SO₂ sorbent in a more efficient manner than that which is currently available through the use of the methods of producing SO₂ sorbent that are presently known in the prior art. As well, there has been provided in accord with the present invention such a new and improved method of producing SO₂ sorbent that is suitable for use for effecting therewith the desulfurization of combustion gases, which is characterized in that the SO₂ sorbent that is produced from the use of the subject method is limestone particles that have been "deadburned" in order to thereby create unreactive lime particles therefrom. Moreover, in accordance with the present invention there has been provided such a new and improved method of producing SO₂ sorbent that is suitable for use to effect therewith the desulfurization of combustion gases, which is characterized in that the "deadburning" of the limestone particles is effected by injecting limestone particles, either in the form of coarse grade particles or otherwise, into a conventional solid fuel-fired steam generator such that concomitantly with the generation of steam in the conventional solid fuel-fired steam generator the limestone particles that are injected thereinto are subjected to "deadburning". Also, there has been provided in accord with the present invention such a new and improved method of producing SO₂ sorbent that is suitable for use to effect therewith the desulfurization of combustion gases, which is characterized in that the limestone particles that are to be subjected to "deadburning" in the conventional solid fuel-fired steam generator, are, unless the limestone particles are already of the desired size, mixed with the solid fuel upstream of a pulverizer for purposes of causing both the limestone particles and the solid fuel to be subjected to pulverization in the pulverizer. Further, in accordance with the present invention there has been provided such a new and improved method of producing SO₂ sorbent and of thereafter utilizing such SO₂ sorbent to effect therewith the desulfurization of combustion gases, which is characterized in that the limestone particles that are to be subjected to "deadburning" in the conventional solid fuel-fired steam generator, if not previously mixed with the solid fuel upstream of the pulverizer, are then either caused to be mixed with the solid fuel downstream of the pulverizer and are injected into the conventional solid fuel-fired steam generator in the form of a mixture of limestone particles and solid fuel, or the limestone particles and the solid fuel are each injected separately into the conventional solid fuel-fired steam generator. Penultimately, there has been provided in accord with the present invention such a new and improved method of producing SO₂ sorbent that is suitable for use to effect therewith the desutfurization of combustion gases, which is characterized in that the limestone particles, that are subjected to "deadburning" in the conventional solid fuel-fired steam generator concomitantly with the generation of steam in the conventional solid fuel-fired steam generator, are made to follow a particular path through the conventional solid fuel-fired steam generator so as to avoid a mixing of the limestone particles with sulfur in the conventional solid fuel-fired steam generator. Finally, in accordance with the present invention there has been provided such a new and improved method of producing SO₂ sorbent that is suitable for use to effect therewith the desulfurization of combustion gases, which is characterized in that it is relatively easy to implement, relatively simple to employ, yet is relatively inexpensive to provide.

## Claims

1. A method of producing SO₂ sorbent that is suitable for use to effect therewith the desulfurization of combustion gases comprising the steps of:
a. providing a solid fuel-fired steam generator having a burner region;
b. injecting solid fuel and combustion air into the burner region of the solid fuel-fired steam generator;
c. effecting the combustion of the solid fuel and of the combustion air within the burner region of the solid fuel-fired steam generator to produce therefrom combustion gases;
d. effecting the production of steam through a heat transfer from the combustion gases as the combustion gases flow through the solid fuel-fired steam generator;
e. injecting limestone particles into the burner region of the solid fuel-fired steam generator; and
f. subjecting within the solid fuel-fired steam generator concomitantly with the production of steam therein the limestone particles to "deadburning" thereby creating unreactive lime particles therefrom.

2. The method as set forth in Claim 1 wherein the limestone particles injected into the burner region of the solid fuel-fired steam generator are of coarse grade.

3. The method as set forth in Claim 1 further comprising the step of effecting the pulverization of the solid fuel in a pulverizer prior to the injection of the solid fuel into the burner region of the solid fuel-fired steam generator.

4. The method as set forth in Claim 3 further comprising the step of mixing the limestone particles prior to the injection thereof into the burner region of the solid fuel-fired steam generator with the solid fuel upstream of the pulverizer in order to thereby cause both the limestone particles and the solid fuel to be subjected to pulverization in the pulverizer.

5. The method as set forth in Claim 3 further comprising the step of mixing the limestone particles prior to the injection thereof into the burner region of the solid fuel-fired steam generator with the solid fuel downstream of the pulverizer in order to thereby cause the limestone particles and the solid fuel to be injected into the burner region of the solid fuel-fired steam generator as a mixture.

## Patentansprüche

1. Verfahren zur Herstellung eines SO₂-Sorptionsmittels, das zum Bewirken der Entschwefelung von Verbrennungsgasen geeignet ist, umfassend die Schritte:
a. Vorsehen eines mit Festbrennstoffen befeuerten Dampferzeugers, der einen Brennerbereich hat;
b. Eintragen von Festbrennstoff und Verbrennungsluft in den Brennerbereich des mit Festbrennstoffen befeuerten Dampferzeugers;
c. Bewirken der Verbrennung des Festbrennstoffs und der Verbrennungsluft in dem Brennerbereich des mit Festbrennstoffen befeuerten Dampferzeugers, um daraus Verbrennungsgase zu erzeugen;
d. Bewirken der Erzeugung von Dampf durch eine Wärmeübertragung von den Verbrennungsgasen, während die Verbrennungsgase durch den mit Festbrennstoffen befeuerten Dampferzeuger fließen;
e. Eintragen von Kalksteinpartikeln in den Brennerbereich des mit Festbrennstoffen befeuerten Dampferzeugers; und
f. Behandeln der Kalksteinpartikel in dem mit Festbrennstoffen befeuerten Dampferzeuger, gleichzeitig mit der Erzeugung von Dampf in diesem, in einem "Totbrennvorgang", wodurch aus diesen nicht reaktive Kalkpartikel erzeugt werden.

2. Verfahren nach Anspruch 1, bei welchem die Kalksteinpartikel, die in den Brennerbereich des mit Festbrennstoffen befeuerten Dampferzeugers eingetragen werden, grobkörnig sind.

3. Verfahren nach Anspruch 1, ferner umfassend den Schritt des Bewirkens der Pulverisierung des Festbrennstoffs in einer Pulverisiereinrichtung vor dem Eintragen des Festbrennstoffs in den Brennerbereich des mit Festbrennstoffen befeuerten Dampferzeugers.

4. Verfahren nach Anspruch 3, ferner umfassend den Schritt des Mischens der Kalksteinpartikel vor dem Eintragen derselben in den Brennerbereich des mit Festbrennstoffen befeuerten Dampferzeugers mit Festbrennstoff stromaufwärts der Pulverisiereinrichtung, so dass dadurch sowohl die Kalksteinpartikel als auch der Festbrennstoff der Pulverisierung in der Pulverisiereinrichtung unterzogen werden.

5. Verfahren nach Anspruch 3, ferner umfassend den Schritt des Mischens der Kalksteinpartikel vor dem Eintragen derselben in den Brennerbereich des mit Festbrennstoffen befeuerten Dampferzeugers mit Festbrennstoff stromabwärts der Pulverisiereinrichtung, so dass dadurch die Kalksteinpartikel und der Festbrennstoff als eine Mischung in den Brennerbereich des mit Festbrenristoffen befeuerten Dampferzeugers eingetragen werden.

## Revendications

1. Procédé de production d'un sorbant de SO₂ adapté pour désulfurer des gaz de combustion, comprenant les étapes consistant à :
a. prévoir un générateur de vapeur à combustible solide présentant une région de brûleur ;
b. injecter le combustible solide et l'air de combustion dans la région de brûleur du générateur de vapeur à combustible solide ;
c. effectuer la combustion du combustible solide et de l'air de combustion à l'intérieur de la région de brûleur du générateur de vapeur à combustible solide pour produire des gaz de combustion à partir de ceux-ci ;
d. produire de la vapeur par l'intermédiaire d'un transfert thermique à partir des gaz de combustion lorsque les gaz de combustion traversent le générateur de vapeur à combustible solide ;
e. injecter des particules de calcaire dans la région de brûleur du générateur de vapeur à combustible solide ; et
f. soumettre, à l'intérieur du générateur de vapeur à combustible solide, parallèlement à la production de vapeur à l'intérieur de celui-ci, les particules de calcaire à une « calcination à mort », ce qui crée des particules de chaux non réactives à partir de celles-ci.

2. Procédé selon la revendication 1, dans lequel les particules de calcaire injectées dans la région de brûleur du générateur de vapeur à combustible solide appartiennent à la catégorie des grosses particules.

3. Procédé selon la revendication 1, comprenant en outre l'étape consistant à effectuer la pulvérisation du combustible solide dans un pulvérisateur avant l'injection du combustible solide dans la région de brûleur du générateur de vapeur à combustible solide.

4. Procédé selon la revendication 3, comprenant en outre l'étape consistant à mélanger les particules de calcaire avant leur injection dans la région de brûleur du générateur de vapeur à combustible solide, le combustible solide se trouvant en amont du pulvérisateur pour ainsi entraîner la pulvérisation à la fois des particules de calcaire et du combustible solide dans le pulvérisateur.

5. Procédé selon la revendication 3, comprenant en outre l'étape consistant à mélanger les particules de calcaire avant leur injection dans la région de brûleur du générateur de vapeur à combustible solide, le combustible solide se trouvant en aval du pulvérisateur pour ainsi entraîner l'injection des particules de calcaire et du combustible liquide dans la région de brûleur du générateur de vapeur à combustible solide sous la forme d'un mélange.
